# EUROPÄISCHE PATENTANMELDUNG

(11) **EP 4 778 728 A2**
(43) Veröffentlichungstag der Anmeldung: **22.07.2026**
(21) Anmeldenummer: 26166028.6
(22) Anmeldetag: 12.05.2022
(51) Int. Cl.: B41F 13/34

(54) **ANTRIEBSVORRICHTUNG FÜR EINE EXZENTERLAGERUNG SOWIE EIN ENTSPRECHENDER KALANDER**

(62) Teilanmeldung aus: 22724632.9
(71) Anmelder: Matthews International GmbH, 48691 Vreden (DE); Matthews International Corporation, Pittsburgh, Pennsylvania 15212 (US)
(72) Erfinder: BARTSCH, Harald, 46286 Dorsten (DE); WILMER, Hermann, 48691 Vreden (DE)
(74) Vertreter: Holzwarth-Rochford, Andreas

(57) **Zusammenfassung**

Die Erfindung betrifft eine Antriebsvorrichtung für eine Exzenterlagerung zum radialen Auslenken einer darin gelagerten Walze, wobei die Exzenterlagerung eine in einer Axialrichtung ausgerichtete Bohrung zum Aufnehmen eines Walzenzapfens einer Walze aufweist, und wobei die Exzenterlagerung eine äußere Exzenterbuchse sowie eine in die äußere Exzenterbuchse abschnittsweise eingesteckte, die Bohrung aufweisende, innere Exzenterbuchse aufweist, so dass die Exzenterbuchsen einen axialen Überlappungsbereich aufweisen, dadurch gekennzeichnet, dass zumindest eine der Exzenterbuchsen außerhalb des Überlappungsbereichs ein freies Ende aufweist, welches mit einer Antriebseinheit gekoppelt ist, über welche die zumindest eine Exzenterbuchse zum Einstellen einer radialen Achsauslenkung der Bohrung gegenüber der anderen Exzenterbuchse um die Axialrichtung rotierbar ist. Die Erfindung betrifft ferner einen entsprechenden Kalander.

## Beschreibung

Die Erfindung betrifft eine Antriebsvorrichtung für eine Exzenterlagerung zum radialen Auslenken einer darin gelagerten Walze sowie einen entsprechenden Kalander, wobei die Exzenterlagerung eine in einer Axialrichtung ausgerichtete Bohrung zum Aufnehmen eines Walzenzapfens einer Walze aufweist, und wobei die Exzenterlagerung eine äußere Exzenterbuchse sowie eine in die äußere Exzenterbuchse abschnittsweise eingesteckte, die Bohrung aufweisende, innere Exzenterbuchse aufweist, so dass die Exzenterbuchsen einen axialen Überlappungsbereich aufweisen.

Aus dem Stand der Technik ist ein Druckmaschinenlager bekannt, welches zum axialen Verlagern oder schrägen Anstellen eines in dem Druckmaschinenlager gelagerten Zylinders Exzenterringe aufweist, welche jeweils gegeneinander und/oder um den Zylinder herum verschwenkbar sind. Das Verstellen der Exzenterringe in der im Stand der Technik offenbarten Lösung erfolgt mittels stirnseitig an der Außenseite des Lagers angeordneten, gelenkig gelagerten Betätigungselementen in Form von Schwenkhebeln, welche zum Einstellen einer gewünschten Exzentrizität in Tangentialrichtung um die Zylinderachse herum verlagerbar sind.

Die im Stand der Technik offenbarte Vorrichtung weist jedoch den Nachteil auf, dass diese aufgrund der stirnseitigen Anordnung der sich von der Zylinderachse wegerstreckenden Schwenkhebel sowie deren Verlagerung sowohl in horizontaler als auch in vertikaler Richtung insbesondere in Radialrichtung des Zylinders viel Platz einnimmt und nicht für enge Bauräume geeignet ist.

Es ist daher die Aufgabe der vorliegenden Erfindung, eine Antriebsvorrichtung für eine Exzenterlagerung derart zu verbessern, dass diese eine kompakte Bauform aufweist.

Die Erfindung wird gelöst mit den Merkmalen der unabhängigen Ansprüche. Vorteilhafte Ausführungsformen sind jeweils in den abhängigen Ansprüchen beschrieben.

Demgemäß ist vorgesehen, dass zumindest eine der Exzenterbuchsen außerhalb des Überlappungsbereichs ein freies Ende aufweist, welches mit einer Antriebseinheit gekoppelt ist, über welche die zumindest eine Exzenterbuchse zum Einstellen einer radialen Achsauslenkung der Bohrung gegenüber der anderen Exzenterbuchse um die Axialrichtung rotierbar ist. Dadurch, dass zumindest eine der Exzenterbuchsen ein freies Ende aufweist, besteht die Möglichkeit, die betreffende Exzenterbuchse nicht zwingend stirnseitig antreiben zu müssen, sondern die Kraft platzsparend über eine tangential angeordnete Antriebseinheit in die Exzenterbuchse einzuleiten.

Es kann vorgesehen sein, dass die innere Exzenterbuchse rotatorisch in der äußeren Exzenterbuchse gelagert ist. Dementsprechend kann im axialen Überlappungsbereich zwischen der Außenfläche der inneren Exzenterbuchse und der Innenfläche der äußeren Exzenterbuchse ein Radiallager angeordnet sein. Ferner kann vorgesehen sein, dass ein in der Bohrung aufnehmbarer Walzenzapfen rotatorisch in der inneren Exzenterbuchse lagerbar ist. Dementsprechend kann im axialen Überlappungsbereich auf der Innenfläche der inneren Exzenterbuchse ein weiteres Radiallager angeordnet sein. Die Exzenterlagerung kann in einer in einem Kalanderrahmen vorgesehenen Bohrung oder Buchse aufgenommen und darin rotatorisch gelagert sein. Dementsprechend kann im Überlappungsbereich zwischen der Außenfläche der äußeren Exzenterbuchse und der inneren Fläche der Bohrung oder Buchse ebenfalls ein Radiallager angeordnet sein. Somit kann die äußere Exzenterbuchse gegenüber der Bohrung oder Buchse rotiert werden, die innere Exzenterbuchse gegenüber der äußeren Exzenterbuchse und die gegebenenfalls in der inneren Exzenterbuchse aufgenommene Walze gegenüber der inneren Exzenterbuchse rotiert werden.

Die innere Bohrung der äußeren Exzenterbuchse kann exzentrisch bezogen auf deren Außendurchmesser sein. In die innere Bohrung der äußeren Exzenterbuchse kann die innere Exzenterbuchse aufgenommen sein. Ferner kann die innere Bohrung der inneren Exzenterbuchse exzentrisch bezogen auf dem Außendurchmesser der inneren Exzenterbuchse sein. Gleichzeitig kann die innere Bohrung der inneren Exzenterbuchse in einer Ausgangsposition beider Exzenterbuchsen konzentrisch zum Außendurchmesser der äußeren Exzenterbuchse sein. Die innere und die äußere Exzenterbuchse können relativ zueinander oder in gleicher Richtung rotiert werden, so dass die Exzentrizität der inneren Bohrung der inneren Exzenterbuchse einstellbar ist, wobei die Richtung und der Grad der Exzentrizität variabel sind. Dazu kann jede der Exzenterbuchsen einen dicken Abschnitt und einen dem dicken Abschnitt gegenüberliegenden dünnen Abschnitt aufweisen. In der oben beschriebenen Ausgangsposition können der dicke Abschnitt der äußeren Exzenterbuchse und der dünne Abschnitt der inneren Exzenterbuchse angenähert sein, sowie der dünne Abschnitt der äußeren Exzenterbuchse und der dicke Abschnitt der inneren Exzenterbuchse angenähert sein. Bei einem relativen Verdrehen beider Exzenterbuchsen zueinander um 180° kann dementsprechend die größtmögliche außermittige Auslenkung erzielt werden. Ferner kann durch gleichzeitiges Verdrehen der inneren zu der äußeren Exzenterbuchse in entgegengesetzte Richtungen eine geradlinige Auslenkung erzielt werden. Außerdem kann durch gleichzeitiges drehrichtungsgleiches Verdrehen der inneren und der äußeren Exzenterbuchse eine Richtungsänderung der Auslenkung erzielt werden.

Ferner kann vorgesehen sein, dass beide Exzenterbuchsen auf gegenüberliegenden Seiten des Überlappungsbereichs ein freies Ende aufweisen, welche jeweils mit einer Antriebseinheit gekoppelt sind, über welche die Exzenterbuchsen zum Einstellen der radialen Achsauslenkung der Bohrung unabhängig voneinander um die Axialrichtung rotierbar sind.

Darüber hinaus kann vorgesehen sein, dass die Antriebseinheit eine auf dem Außenumfang des freien Endes zumindest abschnittsweise angeordneten und mit dem freien Ende gekoppelten Getriebeabtrieb, zum Beispiel eine Außenverzahnung, aufweist. Der Getriebeabtrieb kann sich beispielsweise über den halben Umfang des freien Endes der Exzenterbuchse erstrecken, so dass diese um 180° verschwenkbar ist. Der Getriebeabtrieb kann die Exzenterbuchse somit halbkreisförmig umgeben. Die freien Enden können im Wesentlichen als zylindrische Hohlkörper ausgebildet sein.

Ferner kann die Antriebseinheit ein mit dem Getriebeabtrieb gekoppeltes Antriebselement aufweisen, welches senkrecht zur Axialrichtung angeordnet ist. Das Antriebselement kann rotatorisch oder translatorisch angetrieben sein. Beispielsweise kann das Antriebselement durch eine Zahnstange realisiert sein. Das Antriebselement kann insbesondere eine mit dem Getriebeabtrieb bzw. der Außenverzahnung in Eingriff stehende Schneckenwelle aufweisen. Als Schneckenwelle ausgebildet weist das Antriebselement eine rotatorische Antriebsbewegung auf.

Es kann vorgesehen sein, dass die Antriebseinheiten in Axialrichtung voneinander beabstandet sind. Insbesondere können die Antriebselemente in Axialrichtung voneinander beabstandet sein. Der Abstand kann dabei insbesondere dem Abstand der Getriebeabtriebe auf den jeweiligen freien Enden zueinander entsprechen. Es kann vorgesehen sein, dass die Antriebselemente jeweils in einem diese umgebenden Gehäuse aufgenommen sind. Die Gehäuse können sich wie die Antriebselemente senkrecht zur Axialrichtung der Antriebsvorrichtung erstrecken. Die Gehäuse können jeweils eine Schnittstelle zur Bohrung oder Buchse aufweisen, in welcher die Antriebsvorrichtung aufgenommen ist. Im Bereich der Schnittstellen können die in den Gehäusen aufgenommenen Antriebselemente in die in der Bohrung oder Buchse aufgenommenen Getriebeabtriebe an den freien Enden der Exzenterbuchsen eingreifen.

Die Exzenterlagerung kann in einer Buchse oder einer Bohrung eines Maschinenrahmens oder insbesondere Kalanderrahmens gelagert sein, wobei das Antriebselement über einen außerhalb der Buchse oder der Bohrung angeordneten Motor angetrieben ist. Bei zwei an der Exzenterlagerung vorgesehenen Antriebsvorrichtungen können die Antriebselemente auf derselben oder unterschiedlichen Seiten der mittleren Bohrungsachse angeordnet sein und parallel zueinander ausgerichtet sein. Es kann vorgesehen sein, dass einer der Motoren über eine erste Seite an eines der Antriebselemente gekoppelt und der andere der Motoren über die gegenüberliegende Seite an das andere der Antriebselemente gekoppelt ist. Beispielsweise können bei einer horizontalen Bohrungs- bzw. Walzenausrichtung die Antriebselemente senkrecht angeordnet sein und einer der Motoren mit der Oberseite eines Antriebselements und der andere Motor mit der Unterseite des anderen Antriebselements gekoppelt sein.

Darüber hinaus kann vorgesehen sein, dass zwischen dem Antriebselement und dem Motor eine Winkelversatz vorgesehen ist. Der Winkelversatz kann beispielsweise derart ausgebildet sein, dass der Motor senkrecht zum Antriebselement angeordnet ist. Der Winkelversatz kann durch ein das Antriebselement mit dem Motor koppelndes Winkelgetriebe realisiert sein. Das Winkelgetriebe kann beispielsweise ein Kegelradgetriebe, ein Kegelrad-Planetengetriebe oder ein Hypoidgetriebe sein. Der Motor kann insbesondere ein Servomotor sein. Dadurch kann die Winkelposition der Motorwelle sowie die Drehgeschwindigkeit und Beschleunigung kontrolliert werden. Der Servomotor kann einen Sensor zur Positionsbestimmung aufweisen.

Ferner kann vorgesehen sein, dass die Exzenterbuchsen jeweils eine von der Außenseite der Buchse ablesbare Einstellskala aufweisen. Über diese kann die tatsächliche Position der Exzenterbuchsen kontrolliert werden. Es kann vorgesehen sein, dass die Einstellskala der einen Exzenterbuchse in die axiale und die Einstellskala der anderen Exzenterbuchse in eine radiale Richtung weist und die Einstellskalen jeweils von dort ablesbar sind. Beispielsweise kann die Skala der zur Walzenaußenseite gerichteten Exzenterbuchse stirnseitig ablesbar ausgebildet sein. Ferner kann die Einstellskala der zur Walzenmitte gerichteten Exzenterbuchse von einer Ober- oder Unterseite der die Antriebsvorrichtung aufnehmenden Buchse ablesbar ausgebildet sein. Die Beträge der gewünschten Achsauslenkung werden über die Winkelfunktion der Verdrehung der Exenter umgerechnet. Die Inkrementierung kann in 0,2 mm-Schritten von 0 mm bis zu einem Maximalwert von 4 mm abgelesen werden.

Die Erfindung betrifft ferner einen Kalander mit zumindest zwei parallel angeordneten und in einem Kalanderrahmen gelagerten Walzen, zwischen welchen ein Walzenspalt ausgebildet ist, wobei die Walzen an ihren gegenüberliegenden Enden jeweils einen im Kalanderrahmen gelagerten Walzenzapfen aufweisen, wobei zumindest zwei benachbarte der Walzenzapfen eine Antriebsvorrichtung nach einem der vorangehenden Ansprüche aufweisen. Dadurch, dass an zwei benachbarten Walzenzapfen jeweils eine erfindungsgemäße Antriebsvorrichtung zum Antreiben der Exzenterlagerungen vorgesehen ist, steht insbesondere für die Motoren zum Antreiben der Antriebselemente nur ein geringer Bauraum zur Verfügung. Durch die bei der erfindungsgemäßen Antriebsvorrichtung ermöglichte vorteilhafte Krafteinleitung zum Verstellen der Exzenterbuchsen ist es möglich, die Exzenterbuchsen platzsparend verstellen zu können.

Ferner kann vorgesehen sein, dass bei dem Kalander alle Walzenzapfen der zwei Walzen jeweils eine Antriebsvorrichtung nach einem der Ansprüche 1 bis 13 aufweisen.

Es kann insbesondere vorgesehen sein, dass die Antriebselemente der benachbarten Antriebsvorrichtungen parallel zueinander ausgerichtet sind. Beispielsweise können diese bei einer horizontal ausgerichteten Bohrungs- bzw. Walzenachse senkrecht ausgerichtet sein. Entweder können dabei beide Antriebselemente auf derselben Seite oder auf gegenüberliegenden Seiten der Bohrungs- bzw. Walzenachse angeordnet sein. Beispielsweise können beide Antriebselemente rechts oder links der Walzenachse oder aber auf unterschiedlichen Seiten, also rechts und links, der Walzenachse angeordnet sein.

Die Motoren der benachbarten Antriebsvorrichtungen können so angeordnet sein, dass diese entweder parallel zu den Walzenachsen ausgerichtet sind oder von der jeweils benachbarten Antriebsvorrichtung wegweisen. Beispielsweise kann ein erster Motor einer Antriebsvorrichtung parallel zur Walzenachse und ein zweiter Motor der Antriebsvorrichtung senkrecht zur Walzenachse und von der benachbarten Antriebsvorrichtung wegweisend angeordnet sein. Die Motoren der benachbarten Antriebsvorrichtung können entsprechend ausgerichtet sein.

Es kann vorgesehen sein, dass angrenzend an eine erste der Walzen eine erste Stützwalze und angrenzend an eine zweite der Walzen eine zweite Stützwalze angeordnet sind, welche jeweils gegenläufig zu diesen rotieren. Dabei können die Stützwalzen jeweils einen größeren Durchmesser als die Walzen aufweisen. Die Walzen können jeweils denselben Durchmesser und die Stützwalzen ebenfalls denselben Durchmesser aufweisen. Die Walzen können einen Durchmesser von jeweils 200 mm aufweisen. Die Stützwalzen können jeweils einen Durchmesser von 700 mm aufweisen. Die Achsen der Walzen und der Stützwalzen können in einer Ebene zueinander ausgerichtet sein. Die erste Walze und die erste Stützwalze können aufeinander abrollen und zwischen der zweiten Walze und der zweiten Stützwalze kann ein Walzenspalt ausgebildet sein.

Weitere Einzelheiten der Erfindung werden anhand der nachstehenden Figuren erläutert. Dabei zeigt:
- Figur 1: einen aus dem Stand der Technik bekannten Betätigungsmechanismus zum Verstellen von Exzenterringen eines Druckmaschinenlagers;
- Figur 2: eine schematische Vorderansicht eines Exzenterlagers zum radialen Auslenken eines Lagerzapfens;

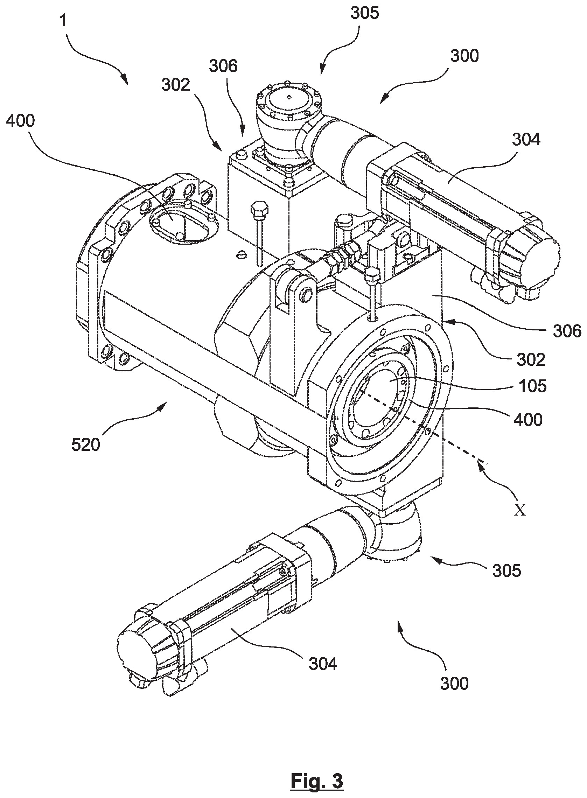

- Figur 3: eine perspektivische Ansicht einer Ausführungsform der erfindungsgemäßen Antriebsvorrichtung;
- Figur 4: eine perspektivische Schnittansicht eines in einem Exzenterlager gelagerten Walzenzapfens;
- Figur 5: eine perspektivische Vorderansicht eines mit Antriebsvorrichtungen ausgestatten Walzenkalanders;
- Figur 6: eine perspektivische Gesamtansicht eines mit Antriebsvorrichtungen ausgestatten Walzenkalanders; und
- Figur 7: eine Draufsicht auf einen mit Antriebsvorrichtungen ausgestatten Kalander zur Herstellung eines Elektrodenfilms aus einem pulverförmigen Elektrodenvorläufermaterial.

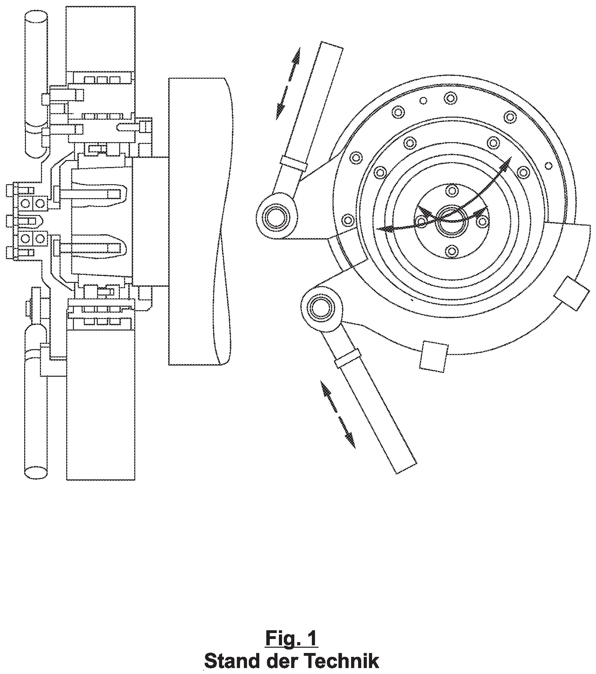

Die in Figur 1 gezeigte Darstellung zeigt ein aus dem Stand der Technik bekanntes Druckmaschinenlager, welches zum axialen Verlagern oder schrägen Anstellen eines darin gelagerten Druckzylinders Exzenterringe aufweist, welche jeweils gegeneinander und/oder um die Zylinderachse verschwenkbar sind. Die Exzenterringe weisen axial dieselbe Dicke auf und sind fluchtend zueinander angeordnet, so dass die Exzenterringe über ihre gesamte Dicke einander überlappen. Wie zu erkennen ist erfolgt das Verstellen der Exzenterringe in der im Stand der Technik offenbarten Lösung mittels an der Außenseite des Lagers angeordneten, gelenkig gelagerten Schwenkhebeln, welche zum Einstellen der geforderten Exzentrizität in Tangentialrichtung um den Zylinder herum verlagerbar sind. Die gezeigte Lösung weist jedoch den Nachteil auf, dass diese aufgrund der notwendigen Länge der Hebel und deren Verlagerung sowohl in horizontaler als auch in vertikaler Richtung insbesondere in Radialrichtung des Zylinders viel Platz einnimmt und nicht für enge Bauräume geeignet ist.

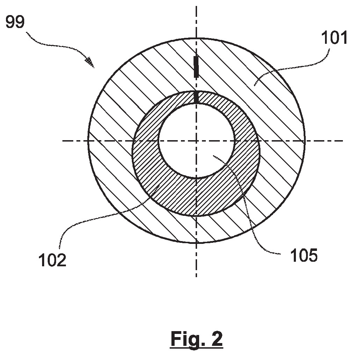

Figur 2 zeigt eine beispielhafte Exzenterlagerung 99, welche dazu dient, einen Walzenzapfen 205 in eine beliebige Richtung orthogonal zur Mittelachse der jeweiligen Walze 201, 202 und in einer einstellbaren Größenordnung auszulenken. Die Exzenterlagerung 99 weist eine äußere Exzenterbuchse 101 auf, deren innere Bohrung exzentrisch bezogen auf den Außendurchmesser der äußeren Exzenterbuchse 101 ist. Die Exzenterlagerung 99 weist ferner eine innere Exzenterbuchse 102 auf, deren innere Bohrung 105 in einer Ausgangsposition konzentrisch zum Außendurchmesser der äußeren Exzenterbuchse 101 ist. Die innere und die äußere Exzenterbuchse 102, 101 sind relativ zueinander oder in gleicher Richtung verdrehbar, so dass die Exzentrizität der inneren Bohrung 105 der inneren Exzenterbuchse 102 einstellbar ist, wobei die Richtung und der Grad der Auslenkung variabel sind. Jede der Exzenterbuchsen 101, 102 weist einen dicken Abschnitt und einen dem dicken Abschnitt gegenüberliegenden dünnen Abschnitt auf. In der oben beschriebenen Ausgangsposition sind der dicke Abschnitt der äußeren Exzenterbuchse 101 und der dünne Abschnitt der inneren Exzenterbuchse 102 angenähert, sowie der dünne Abschnitt der äußeren Exzenterbuchse 101 und der dicke Abschnitt der inneren Exzenterbuchse 102 angenähert. Bei einem relativen Verdrehen beider Exzenterbuchsen 101, 102 zueinander um 180° kann dementsprechend die größtmögliche außermittige Auslenkung erzielt werden.

Figur 2 zeigt eine Ausführungsform der erfindungsgemäßen Antriebvorrichtung 1. In einer mit einem Maschinenrahmen 500 verbindbaren Buchse 520 ist dabei ein Exzenterlager 99 aufgenommen, welches eine innere und eine äußere Exzenterbuchse 101, 102 aufweist, welche um eine X-Achse gegeneinander rotierbar sind, bzw. gegenüber der Buchse 520 bzw. gegenüber einem in einer inneren Bohrung 105 der inneren Exzenterbuchse 102 aufnehmbaren Walzenzapfen 205 jeweils rotierbar sind. Zum Antreiben der der Walzenmitte zugewandten Exzenterbuchse ist eine erste Antriebseinheit 300 vorgesehen, welche ein senkrecht zur X-Achse angeordnetes Antriebselement 302 aufweist, das in einem Gehäuse 306 aufgenommen ist. Das Gehäuse 306 weist eine Schnittstelle mit der Buchse 520 auf, über welche das Antriebselement 302 mit einem Getriebeabtrieb in Form einer Außenverzahnung 301 gekoppelt ist, welche auf dem Außenumfang eines freien Ende 104 der Exzenterbuchse angeordnet ist, wobei das Antriebselement 302 tangential an die Außenverzahnung 301 angelenkt ist. Ein das Antriebselement 302 antreibender Servomotor 304 ist mit dem Antriebselement 302 über einen Winkelgetriebe 305 gekoppelt, wobei der Motor 304 senkrecht zum Antriebselement 302 und parallel zur X-Achse oberhalb der Buchse 520 angeordnet ist. Zum Antreiben der der Walzenmitte abgewandten Exzenterbuchse ist eine zweite Antriebseinheit 300 vorgesehen, welche entsprechend zur ersten Antriebseinheit 300 ausgebildet ist, wobei das in dem Gehäuse 306 aufgenommene Antriebselement 302 mit dem freien Ende 104 der der Walzenmitte abgewandten Exzenterbuchse gekoppelt ist. Die Gehäuse 306 bzw. die Antriebselemente 302 sind dabei parallel zueinander rechts der X-Achse angeordnet. Im Unterschied zur ersten Antriebseinheit 300 ist bei der zweiten Antriebseinheit 300 der Motor 304 an der Unterseite der Buchse 520 angeordnet, und zwar ebenfalls senkrecht zum Antriebselement 302, jedoch nicht parallel zur X-Achse, sondern senkrecht zu dieser die

Buchse 520 kreuzend angeordnet. Zum Ablesen der Einstellung der der Walzenmitte zugewandten Exzenterbuchse weist die Buchse 520 an ihrer Oberseite ein Sichtfenster auf, über welche die am freien Ende 104 vorgesehene Einstellskala 400 ablesbar ist. Zum Ablesen der Einstellung der der Walzenmitte abgewandten Exzenterbuchse weist die Stirnseite des freien Endes 104 der Exzenterbuchse einen Skalierring mit einer weiteren Einstellskala 400 auf, so dass diese frontseitig ablesbar ist.

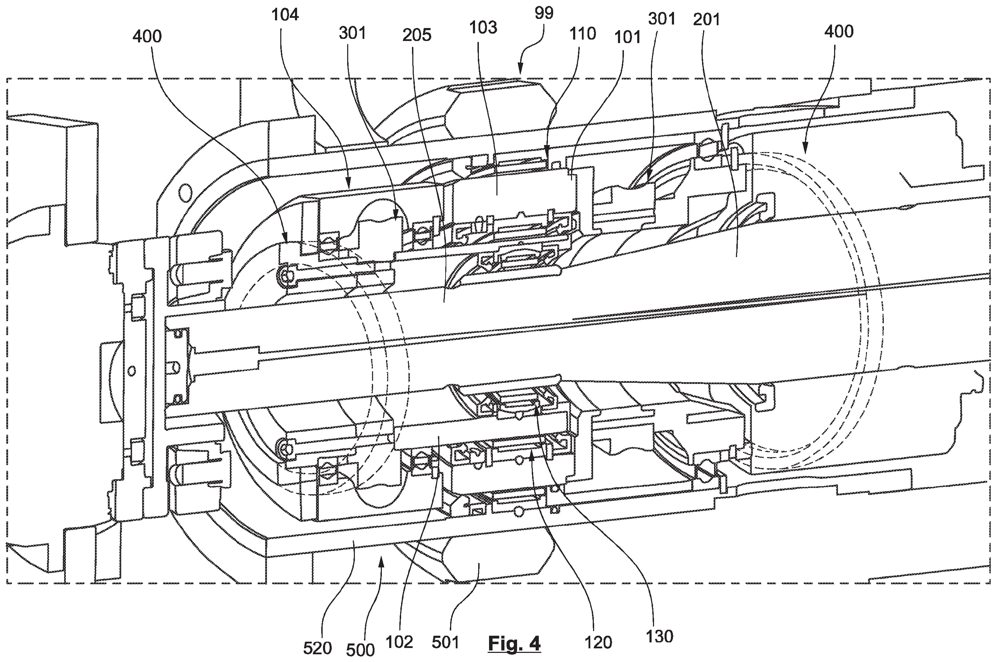

Figur 4 zeigt eine Schnittansicht durch eine Walze 201 und eine am Walzenzapfen 205 der Walze 201 montierte Exzenterlagerung 99. Die Walze 201 ist in einem Maschinenrahmen 500 gelagert, welcher Buchse 520 aufweist, in welcher der Walzenzapfen 205 samt Exzenterlagerung 99 aufgenommen ist. Die Exzenterlagerung 99 umfasst im Wesentlichen eine innere Exzenterbuchse 102 und eine äußere Exzenterbuchse 101, wobei der Walzenzapfen 205 in einer Bohrung 105 der inneren Exzenterbuchse 102 aufgenommen ist. Die innere Exzenterbuchse 102 ist abschnittsweise in die äußere Exzenterbuchse 101 eingesteckt, so dass diese einen axialen Überlappungsbereich 103 aufweisen. Die äußere Exzenterbuchse 101 ist über ein erstes Radiallager 110 in der Zylinderbuchse axial drehbar gelagert. Die innere Exzenterbuchse 102 ist in der äußeren Exzenterbuchse 101 über ein zweites axial drehbares Radiallager 120 gelagert. Der Walzenzapfen 205 ist wiederum über ein drittes Radiallager 130 axial drehbar in der inneren Exzenterbuchse 130 gelagert. In der dargestellten Ausrichtung befindet sich die Exzenterlagerung 99 in ihrer Ausgangsposition, in der der dicke Abschnitt der äußeren Exzenterbuchse 101 an den dünnen Abschnitt der inneren Exzenterbuchse 102 angenähert ist und der dünne Abschnitt der äußeren Exzenterbuchse 101 an den dicken Abschnitt der inneren Exzenterbuchse 102 angenähert ist, so dass der Walzenzapfen 205 zentriert und nicht ausgelenkt ist. Die Exzenterbuchsen 101 und 102 sind unabhängig voneinander mittels separater Antriebseinheiten 300 verstellbar. Dazu weisen die Exzenterbuchsen 101, 102 jeweils sich gegenüberliegend von dem Überlappungsbereich 103 wegerstreckende freie Enden 104 auf, welche jeweils einen Getriebeabtrieb in Form einer Außenverzahnung 301 aufweisen, über welche die Exzenterbuchsen 101, 102 unabhängig voneinander verstellbar sind. Frontseitig weist die der Walzenmitte abgewandte innere Exzenterbuchse 102 eine stirnseitig ablesbare Einstellskala 400 auf. Rückseitig weist die der Walzenmitte zugewandte äußere Exzenterbuchse 101 eine umfangsseitig ablesbare Einstellskala 400 auf.

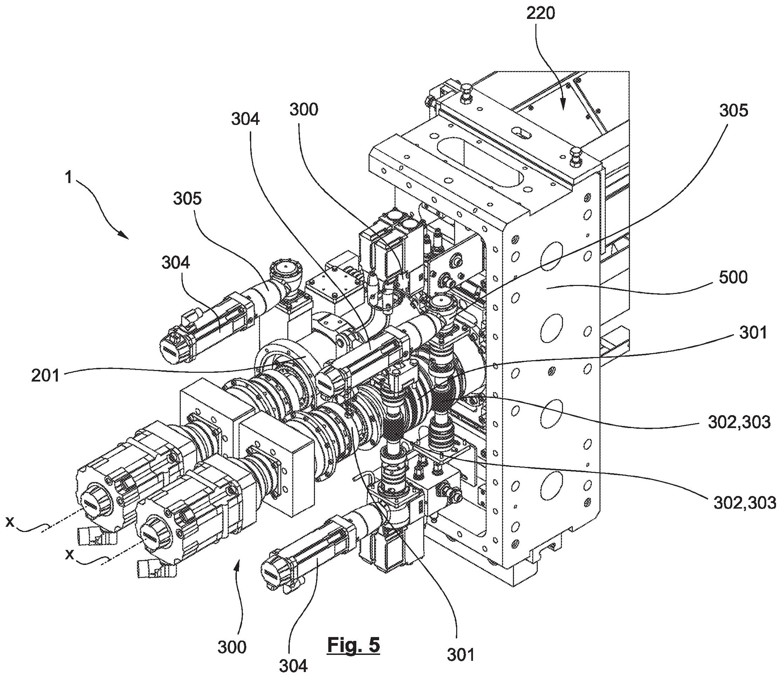

Figur 5 zeigt eine perspektivische Frontalansicht eines Kalanders 2 mit zwei in einem Maschinenrahmen 500 horizontal und parallel gelagerten Walzen 201, welche einen Walzenspalt 220 ausbilden und daher sehr nah nebeneinander angeordnet sind. An den aus dem Maschinengestell herausragenden Walzenzapfen 205 ist jeweils eine Antriebsvorrichtung 1 mit je zwei Antriebseinheiten 300 montiert. Die Antriebselemente 302 weisen wie dargestellt jeweils eine Schneckenwelle 303 auf, welche mit den jeweiligen Außenverzahnungen 301 in Eingriff stehen. Die Antriebselemente 302 sind alle jeweils vertikal an den dem Walzenspalt 220 abgewandten Seiten der Walzen 201 angeordnet, wobei jeweils ein Motor 304 jeder Antriebsvorrichtung 1 oberhalb der jeweiligen Walze 201 und jeweils ein Motor 304 jeder Antriebsvorrichtung 1 unterhalb der jeweiligen Walze 201 angeordnet ist. Gleichzeitig sind alle Motoren senkrecht zu den Antriebselementen 302 und parallel zu den Walzenachsen X ausgerichtet.

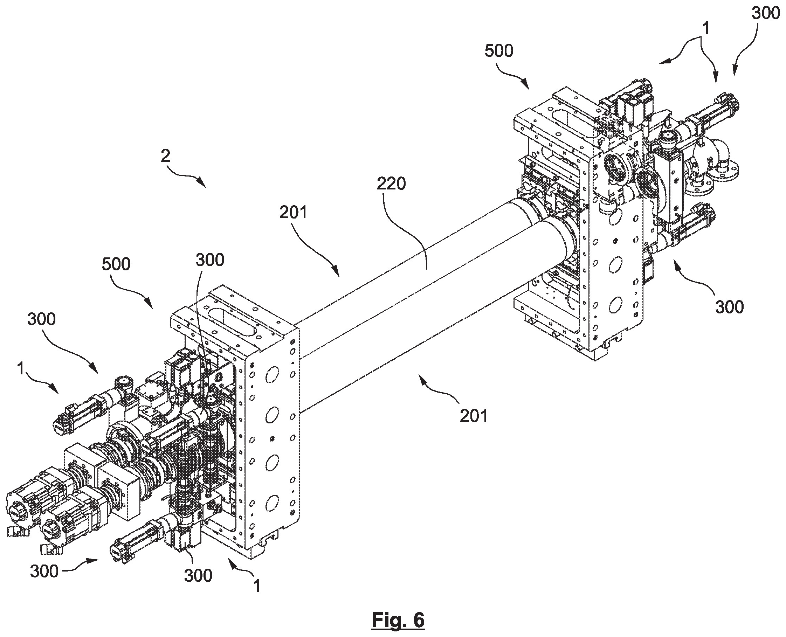

Figur 6 zeigt eine Gesamtansicht des in Figur 5 dargestellten Kalanders 2. Diese zeigt die im Wesentlichen spiegelbildliche Lagerung der an gegenüberliegenden Enden der Walzen 201 vorgesehenen Walzenzapfen 205 im Maschinenrahmen 500, wobei an jedem Walzenzapfen 205 eine Antriebsvorrichtung 1 mit je einem Exzenterlager 99 und zwei Antriebseinheiten 300 montiert ist. Deutlich zu erkennen ist der zwischen den Walzen 201 ausgebildete Walzenspalt 220 von wenigen Millimetern, durch welchen die Walzen 201 stirnseitig eine sehr kompakte Bauweise von Anschlusselementen wie den Antriebseinheiten 300 benötigen. Sämtliche der Motoren 304 sind auf der jeweils vom Walzenspalt 220 abgewandten Seite der Walzen 201 montiert, wobei jeweils ein Motor 304 an der Oberseite und ein Motor 304 an der Unterseite der Walze 201 montiert und parallel zu den Walzenachsen X montiert ist.

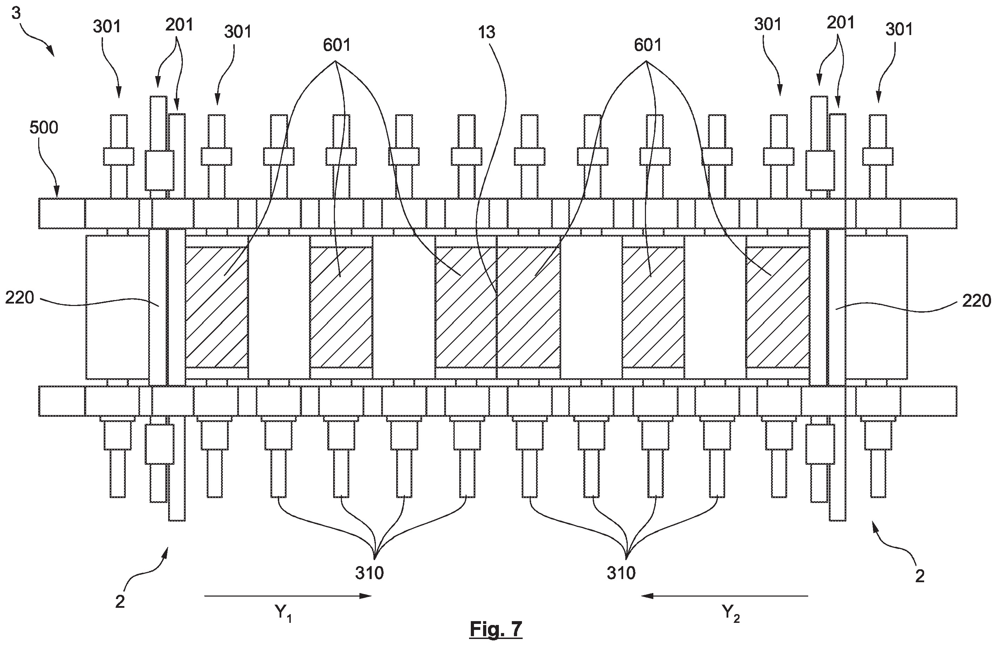

Figur 7 zeigt eine Draufsicht auf einen Mehrwalzenkalander 3, welcher die Anordnung der Walzen 201 in Bezug auf die Stützwalzen 210 in einem integrierten Walzsystem gemäß einer Ausführungsform zeigt. Der Mehrwalzenkalander 2 dient zum Herstellen einer beidseitig mit Elektrodenfilmen 601, 602 beschichteten Separatorfolie (nicht dargestellt). Die Anordnung weist zwei stirnseitig aneinander positionierte Kalanderanordnungen 2 auf, welche gegenläufige Hauptförderrichtungen Y1, Y2 aufweisen. Die Kalanderanordnungen 2 weisen jeweils acht in einem Maschinenrahmen 500 gelagerte Walzen 201, 210, 310 auf. Eingangsseitig weist die Anordnung jeweils zwei seitlich durch Stützwalzen 210 gestützte Walzen 201 auf, welche als Pulvermühle zum Erzeugen der Elektrodenfilme 601, 602 aus einem pulverförmigen Elektrodenvorläufermaterial dienen. An die Stützwalzen schließen sich nachfolgend jeweils noch vier Förderwalzen 310 an, welche den Elektrodenfilm auf die gewünschte Breite und Dicke bringen und diesen homogenisieren. Die eingangsseitige Endwalze 210 ist dabei als unmittelbar auf der ersten Walze 201 abrollende Stützwalze 210 ausgebildet ist. Die ausgangsseitigen Förderwalzen 310 bilden einen gemeinsamen Endwalzenspalt 13, in welchem die Elektrodenfilme 601, 602 auf die Separatorfolie aufgebracht werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

Weitere nicht einschränkende Ausführungsformen oder Aspekte sind in den folgenden Beispielen dargelegt.

### Beispiele

1. Antriebsvorrichtung (1) für eine Exzenterlagerung (99) zum radialen Auslenken einer darin gelagerten Walze (205), wobei die Exzenterlagerung (99) eine in einer Axialrichtung (X) ausgerichtete Bohrung (105) zum Aufnehmen eines Walzenzapfens (205) einer Walze (201) aufweist, und wobei die Exzenterlagerung (99) eine äußere Exzenterbuchse (101) sowie eine in die äußere Exzenterbuchse (101) abschnittsweise eingesteckte, die Bohrung (105) aufweisende, innere Exzenterbuchse (102) aufweist, so dass die Exzenterbuchsen (101, 102) einen axialen Überlappungsbereich (103) aufweisen, dadurch gekennzeichnet, dass zumindest eine der Exzenterbuchsen (101, 102) außerhalb des axialen Überlappungsbereichs (103) ein freies Ende (104) aufweist, welches mit einer Antriebseinheit (300) gekoppelt ist, über welche die zumindest eine Exzenterbuchse (101, 102) zum Einstellen einer radialen Achsauslenkung der Bohrung (105) gegenüber der anderen Exzenterbuchse (101, 102) um die Axialrichtung (X) rotierbar ist.
2. Antriebsvorrichtung (1) nach Beispiel 1, bei welcher beide Exzenterbuchsen (101, 102) auf gegenüberliegenden Seiten des axialen Überlappungsbereichs (103) ein freies Ende (104) aufweisen, welche jeweils mit einer Antriebseinheit (300) gekoppelt sind, über welche die Exzenterbuchsen (101, 102) zum Einstellen der radialen Achsauslenkung der Bohrung (105) unabhängig voneinander um die Axialrichtung (X) rotierbar sind.
3. Antriebsvorrichtung (1) nach Beispiel 1 oder 2, wobei die Antriebseinheit (300) eine auf dem Außenumfang des freien Endes (104) zumindest abschnittsweise angeordneten und mit dem freien Ende gekoppelten Getriebeabtrieb, zum Beispiel eine Außenverzahnung (301), aufweist.
4. Antriebsvorrichtung (1) nach Beispiel 3, wobei die Antriebseinheit (1) ein mit dem Getriebeabtrieb gekoppeltes Antriebselement (302) aufweist, welches senkrecht zur Axialrichtung (X) angeordnet ist.
5. Antriebsvorrichtung (1) nach Beispiel 4, wobei das Antriebselement (302) eine mit dem Getriebeabtrieb bzw. der Außenverzahnung (301) in Eingriff stehende Schneckenwelle (303) aufweist.
6. Antriebsvorrichtung (1) nach einem der vorangehenden Beispiele 2 bis 5, wobei die Antriebseinheiten (300) in Axialrichtung (X) voneinander beabstandet sind.
7. Antriebsvorrichtung (1) nach einem der Beispiele 4 bis 6, wobei die Exzenterlagerung (99) in einer Buchse (520) eines Maschinenrahmens (500) gelagert ist, wobei das Antriebselement (302) über einen außerhalb der Buchse (520) angeordneten Motor (304) angetrieben ist.
8. Antriebsvorrichtung (1) nach einem der Beispiele 4 bis 7, wobei zwischen dem Antriebselement (302) und dem Motor (304) eine Winkelversatz vorgesehen ist.
9. Antriebsvorrichtung (1) nach Beispiel 8, wobei der Winkelversatz derart ausgebildet ist, dass der Motor (304) senkrecht zum Antriebselement (302) angeordnet ist.
10. Antriebsvorrichtung (1) nach einem der Beispiele 8 oder 9, wobei der Winkelversatz durch ein das Antriebselement (302) mit dem Motor (304) koppelndes Winkelgetriebe (305) realisiert ist.
11. Antriebsvorrichtung (1) nach einem der Beispiele 7 bis 10, wobei der Motor (304) ein Servomotor ist.
12. Antriebsvorrichtung (1) nach einem der vorangehenden Beispiele, wobei die Exzenterbuchsen (101, 102) jeweils eine von der Außenseite der Buchse (520) ablesbare Einstellskala (400) aufweisen.
13. Antriebsvorrichtung (1) nach Beispiel 11, wobei die Einstellskala (400) der einen Exzenterbuchse (101, 102) in die axiale und die Einstellskala (400) der anderen Exzenterbuchse (101, 102) in eine radiale Richtung (Y) weist und die Einstellskalen (400) jeweils von dort ablesbar sind.
14. Kalander (2) mit zumindest zwei parallel angeordneten und in einem Kalanderrahmen (500) gelagerten Walzen (201), zwischen welchen ein Walzenspalt ausgebildet ist, wobei die Walzen (201) an ihren gegenüberliegenden Enden jeweils einen im Kalanderrahmen (500) gelagerten Walzenzapfen (205) aufweisen, wobei zumindest zwei benachbarte der Walzenzapfen (205) eine Antriebsvorrichtung (1) nach einem der vorangehenden Beispiele aufweisen.
15. Kalander (2) nach Beispiel 14, wobei alle Walzenzapfen (205) der zwei Walzen (201) jeweils eine Antriebsvorrichtung (1) nach einem der Beispiele 1-13 aufweisen.
16. Kalander (2) nach Beispiel 14, wobei die Antriebselemente (302) der benachbarten Antriebsvorrichtungen (1) parallel zueinander ausgerichtet sind.
17. Kalander (2) nach Beispiel 14 oder 15, wobei die Motoren (304) der benachbarten Antriebsvorrichtungen (1) so angeordnet sind, dass diese entweder parallel zu den Walzenachsen (X) ausgerichtet sind oder von der jeweils benachbarten Antriebsvorrichtung (1) wegweisen.
18. Kalander (2) nach einem der Beispiele 14 bis 16, wobei angrenzend an eine erste der Walzen (201) eine erste Stützwalze (210) und angrenzend an eine zweite der Walzen (201) eine zweite Stützwalze (210) angeordnet sind, welche jeweils gegenläufig zu diesen rotieren.
19. Kalander (2) nach Beispiel 17, wobei die Stützwalzen (210) jeweils einen größeren Durchmesser als die Walzen aufweisen.
20. Kalander (1) nach einem der Beispiele 17 oder 18, wobei die Achsen der Walzen (201) und der Stützwalzen (210) in einer Ebene zueinander ausgerichtet sind.
21. Kalander nach einem der Beispiele 14 bis 20, wobei die erste Walze (201) und die erste Stützwalze (210) aufeinander abrollen und zwischen der zweiten Walze (201) und der zweiten Stützwalze (210) ein Walzenspalt (220) ausgebildet ist.

### Bezugszeichenliste

- 1: Antriebsvorrichtung
- 2: Kalander
- 13: Endwalzenspalt
- 99: Exzenterlager
- 100: Vorspanneinrichtung
- 101: äußere Exzenterbuchse
- 102: innere Exzenterbuchse
- 103: axialer Überlappungsbereich
- 104: freies Ende
- 105: Bohrung der inneren Exzenterbuchse
- 110: erstes Radiallager
- 120: zweites Radiallager
- 130: drittes Radiallager
- 201: Walze
- 205: Walzenzapfen
- 210: Stützwalze
- 220: Walzenspalt
- 300: Antriebseinheit
- 301: Außenverzahnung
- 302: Antriebselement
- 303: Schneckenwelle
- 304: Motor
- 305: Winkelgetriebe
- 310: Förderwalzen
- 400: Einstellskala
- 500: Kalanderrahmen
- 501: Lagerung
- 520: Bohrung/Buchse
- 601: erster Elektrodenfilm
- 602: zweiter Elektrodenfilm
- X: Axialrichtung
- Y1: Förderrichtung des ersten Elektrodenfilms
- Y2: Förderrichtung des zweiten Elektrodenfilms

## Patentansprüche

1. Antriebsvorrichtung (1) für eine Exzenterlagerung (99), wobei die Exzenterlagerung (99) eine äußere Exzenterbuchse (101) sowie eine in die äußere Exzenterbuchse (101) abschnittsweise eingesteckte innere Exzenterbuchse (102) aufweist, wobei zumindest eine der Exzenterbuchsen (101, 102) ein freies Ende (104) aufweist, welches mit einer Antriebseinheit (300) gekoppelt ist, über welche die zumindest eine Exzenterbuchse (101, 102) gegenüber der anderen Exzenterbuchse (101, 102) rotierbar ist.

2. Antriebsvorrichtung (1) nach Anspruch 1, wobei das freie Ende (104) axial über einen Bereich hinausragt, in dem die innere Exzenterbuchse (102) in die äußere Exzenterbuchse eingeführt ist.

3. Antriebsvorrichtung (1) nach Anspruch 1 oder 2, wobei die Exzenterlagerung (99) eine in einer Axialrichtung (X) ausgerichtete Bohrung (105) aufweist, und wobei die Exzenterbuchsen (101, 102) einen axialen Überlappungsbereich (103) aufweisen und das freie Ende (104) außerhalb des axialen Überlappungsbereichs (103) liegt.

4. Antriebsvorrichtung (1) nach einem der Ansprüche 1 bis 3, wobei (i) beide Exzenterbuchsen (101, 102) auf gegenüberliegenden Seiten des axialen Überlappungsbereichs (103) ein freies Ende (104) aufweisen, welche jeweils mit einer Antriebseinheit (300) gekoppelt sind, über welche die Exzenterbuchsen (101, 102) zum Einstellen der radialen Achsauslenkung der Bohrung (105) unabhängig voneinander um die Axialrichtung (X) rotierbar sind, und/oder (ii) die Antriebseinheit (300) einen auf dem Außenumfang des freien Endes (104) zumindest abschnittsweise angeordneten und mit dem freien Ende gekoppelten Getriebeabtrieb, zum Beispiel eine Außenverzahnung (301), aufweist.

5. Antriebsvorrichtung (1) nach Alternative (ii) des Anspruchs 4, wobei die Antriebseinheit (300) ein mit dem Getriebeabtrieb gekoppeltes Antriebselement (302) aufweist, welches senkrecht zur Axialrichtung (X) angeordnet ist, wobei optional das Antriebselement (302) eine mit dem Getriebeabtrieb bzw. der Außenverzahnung (301) in Eingriff stehende Schneckenwelle (303) aufweist.

6. Antriebsvorrichtung (1) nach Anspruch 4 oder 5, wobei die Antriebseinheiten (300) in Axialrichtung (X) voneinander beabstandet sind.

7. Antriebsvorrichtung (1) nach einem der Ansprüche 5 oder 6, wobei
(i) die Exzenterlagerung (99) in einer Buchse (520) eines Maschinenrahmens (500) gelagert ist, wobei das Antriebselement (302) über einen außerhalb der Buchse (520) angeordneten Motor (304) angetrieben ist, und/oder
(ii) zwischen dem Antriebselement (302) und dem Motor (304) ein Winkelversatz vorgesehen ist, wobei optional der Winkelversatz derart ausgebildet ist, dass der Motor (304) senkrecht zum Antriebselement (302) angeordnet ist, und/oder der Winkelversatz durch ein das Antriebselement (302) mit dem Motor (304) koppelndes Winkelgetriebe (305) realisiert ist.

8. Antriebsvorrichtung (1) nach Anspruch 7, wobei der Motor (304) ein Servomotor ist.

9. Antriebsvorrichtung (1) nach Anspruch 7 oder 8, wobei die Exzenterbuchsen (101, 102) jeweils eine von der Außenseite der Buchse (520) ablesbare Einstellskala (400) aufweisen, wobei optional die Einstellskala (400) der einen Exzenterbuchse (101, 102) in die axiale Richtung und die Einstellskala (400) der anderen Exzenterbuchse (101, 102) in eine radiale Richtung (Y) weist und die Einstellskalen (400) jeweils von dort ablesbar sind.

10. Kalander (2) mit zumindest zwei parallel angeordneten und in einem Kalanderrahmen (500) gelagerten Walzen (201), zwischen welchen ein Walzenspalt ausgebildet ist, wobei die Walzen (201) an ihren gegenüberliegenden Enden jeweils einen im Kalanderrahmen (500) gelagerten Walzenzapfen (205) aufweisen, wobei zumindest zwei benachbarte der Walzenzapfen (205) eine Antriebsvorrichtung (1) nach einem der vorangehenden Ansprüche aufweisen.

11. Kalander (2) nach Anspruch 9, wobei alle Walzenzapfen (205) der zwei Walzen (201) jeweils eine Antriebsvorrichtung (1) nach einem der Ansprüche 1 bis 8 aufweisen, wobei optional die Antriebselemente (302) der benachbarten Antriebsvorrichtungen (1) parallel zueinander ausgerichtet sind.

12. Kalander (2) nach Anspruch 10 oder 11, wobei die Motoren (304) der benachbarten Antriebsvorrichtungen (1) so angeordnet sind, dass diese entweder parallel zu den Walzenachsen ausgerichtet sind oder von der jeweils benachbarten Antriebsvorrichtung (1) wegweisen.

13. Kalander (2) nach einem der Ansprüche 10 bis 12, wobei angrenzend an eine erste der Walzen (201) eine erste Stützwalze (210) und angrenzend an eine zweite der Walzen (201) eine zweite Stützwalze (210) angeordnet sind, welche jeweils gegenläufig zu diesen rotieren, wobei optional wobei die Stützwalzen (210) jeweils einen größeren Durchmesser als die Walzen aufweisen.

14. Kalander (2) nach Anspruch 13, wobei die Achsen der Walzen (201) und der Stützwalzen (210) in einer Ebene zueinander ausgerichtet sind.

15. Kalander (2) nach einem der Ansprüche 10 bis 14, wobei die erste Walze (201) und die erste Stützwalze (210) aufeinander abrollen und zwischen der zweiten Walze (201) und der zweiten Stützwalze (210) ein Walzenspalt (220) ausgebildet ist.
